(19) Europäisches Patentamt
European Patent Office
Office européen des brevets

(11) **EP 4 041 513 B1**

(12) **EUROPÄISCHE PATENTSCHRIFT**

(45) Veröffentlichungstag und Bekanntmachung des Hinweises auf die Patenterteilung:
**27.09.2023 Patentblatt 2023/39**

(21) Anmeldenummer: **20781555.6**

(22) Anmeldetag: **06.10.2020**

(51) Internationale Patentklassifikation (IPC):
**B29B 7/48** (2006.01) **B29B 7/84** (2006.01)
**B29C 48/405** (2019.01) **B29C 48/52** (2019.01)
**B29C 48/535** (2019.01) **B29C 48/54** (2019.01)
**B29C 48/76** (2019.01) **B29B 7/74** (2006.01)
**B29B 7/88** (2006.01) **B29B 7/90** (2006.01)
**B29B 7/94** (2006.01)

(52) Gemeinsame Patentklassifikation (CPC):
**B29B 7/845; B29B 7/484; B29B 7/485;**
**B29B 7/489; B29C 48/405; B29C 48/52;**
**B29C 48/535; B29C 48/54; B29C 48/767;**
B29B 7/7495; B29B 7/88; B29B 7/90; B29B 7/94

(86) Internationale Anmeldenummer:
**PCT/EP2020/077906**

(87) Internationale Veröffentlichungsnummer:
**WO 2021/069396 (15.04.2021 Gazette 2021/15)**

(54) **EXTRUDER MIT SCHNECKENELEMENTEN MIT BESONDERS GROSSER STEIGUNG IM BEREICH DER ENTGASUNGSÖFFNUNG, SOWIE DESSEN VERWENDUNG**

EXTRUDER WITH SCREW ELEMENTS WITH PARTICULARLY LARGE INCLINE IN THE AREA OF THE DEGASSING OPENING, AND ITS USE

EXTRUDEUSE POURVUE D'ÉLÉMENTS VIS À UNE PENTE PLUS IMPORTANTE DANS LA ZONE D'OUVERTURE DE DÉGAZAGE, ET SA UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2019 EP 19202448**

(43) Veröffentlichungstag der Anmeldung:
**17.08.2022 Patentblatt 2022/33**

(73) Patentinhaber: **Covestro Intellectual Property GmbH & Co. KG**
**51373 Leverkusen (DE)**

(72) Erfinder: **ENGBERG, Roland**
**40477 Düsseldorf (DE)**

(74) Vertreter: **Levpat**
**c/o Covestro AG**
**Gebäude K12**
**51365 Leverkusen (DE)**

(56) Entgegenhaltungen:
**US-A- 5 811 511     US-A1- 2008 036 115**
**US-B1- 6 511 217**

**Beschreibung**

Gegenstand der vorliegenden Erfindung ist ein mehrwelliger Extruder mit gleichsinnig und gleichschnell drehbaren Schneckenwellen, der mindestens eine Entgasungsöffnung aufweist, und der im Eintrittsbereich dieser mindestens einen Entgasungsöffnung Schneckenelemente mit besonders großer Steigung aufweist oder Schneckenelemente aufweist, die ein asymmetrisches Schneckenprofil aufweisen oder die exzentrisch auf der Drehachse der Schneckenwelle aufgezogen sind. Gegenstand der vorliegenden Erfindung ist auch die Verwendung des erfindungsgemäßen Extruders zur Verarbeitung oder Herstellung von plastischen Massen. Gegenstand der vorliegenden Erfindung ist außerdem die Verwendung der Schneckenelemente mit besonders großer Steigung oder die Verwendung von Schneckenelementen, die ein asymmetrisches Schneckenprofil aufweisen oder die exzentrisch auf der Drehachse der Schneckenwelle aufgezogen sind, im Bereich der Entgasungsöffnung eines mehrwelligen Extruders.

Ein Schneckenelement mit besonders großer Steigung zeichnet sich dadurch aus, dass es ein Verhältnis X von Steigung T des Schneckenelements zum Gehäuseinnendurchmesser Di des Extruders hat, das von 1,75 bis 15 beträgt. Ein asymmetrisches Schneckenelement zeichnet sich dadurch aus, dass es gibt keine Spiegelachse durch einen beliebigen Punkt in der Ebene des Schneckenprofils gibt, mit der ein zum Ausgangsprofil deckungsgleiches Profil erzeugt werden kann; bevorzugt gibt es keine Spiegelachse durch einen beliebigen Punkt innerhalb des Schneckenprofils, besonders bevorzugt keine Spiegelachse durch den Flächenschwerpunkt des Schneckenprofils, mit der ein zum Ausgangsprofil deckungsgleiches Profil erzeugt werden kann. Ein exzentrisch auf der Drehachse der Schneckenwelle aufgezogenes Schneckenelement zeichnet sich dadurch aus, dass der Drehpunkt des Schneckenprofils außerhalb des Flächenschwerpunkts des Schneckenprofils liegt. Ein exzentrisch auf der Drehachse der Schneckenwelle aufgezogenes Schneckenelement kann ein symmetrisches oder ein asymmetrisches Schneckenprofil aufweisen.

Im Sinne der vorliegenden Erfindung wird unter dem Begriff "Schneckenquerschnittsprofil", kurz auch oder "Schneckenprofil" genannt, die äußere Kontur eines Schneckenelements im Querschnitt rechtwinklig zur Drehachse des Schneckenelements verstanden.

Extruder, insbesondere Mehrwellenextruder, werden unter anderem zur Entgasung von plastischen Massen, insbesondere zur Entgasung von Kunststoffen, wiederum insbesondere zur Entgasung von Schmelzen oder Lösungen von thermoplastischen Polymeren oder Schmelzen oder Lösungen von Kautschuken, eingesetzt. Um flüchtige Bestandteile wie beispielsweise Lösungsmittel oder auch Monomere, die bei der Herstellung eines Polymers nicht zu diesem umgesetzt wurden, zu entfernen, besitzen solche Entgasungsextruder in der Regel im Gehäuse Entgasungsöffnungen. Dort können die flüchtigen Bestandteile aus dem Polymer in die Gasphase übergehen und entfernt werden.

Entgasungsextruder sind aus der Fachliteratur hinlänglich bekannt, beispielsweise aus [1] ([1] = Klemens Kohlgrüber: Der gleichläufige Doppelschneckenextruder, Hanser Verlag München 2007, S. 72-73 und 191-212).

Im Bereich einer Entgasungsöffnung eines Mehrwellenextruders kann es jedoch zu Ablagerungen des Polymers kommen, wenn das Polymer an der äußeren Kante der Entgasungsöffnung, die parallel zur abwärtsdrehenden Schneckenflanke verläuft, nicht vollständig wieder eingezogen wird. Der Polymerwulst, der sich dann bildet, wird langsamer ausgetauscht als die übrige Polymermasse im gleichen Querschnitt des Mehrwellenextruders. Dies kann zu einer breiteren Verweilzeitverteilung des Polymers im Mehrwellenextruder und dadurch dazu führen, dass die gewünschten Eigenschaften des Polymers nicht oder nur unvollständig erreicht werden. Außerdem kann der maximal mögliche Durchsatz des Mehrwellenextruders durch den Wiedereinzug der Polymermasse im Bereich der Entgasungsöffnung verringert werden, wenn die Entgasungsöffnung bei hohen Durchsätzen durch unzureichenden Wiedereinzug vollläuft und der Durchsatz reduziert werden muss, um einen ausreichenden Wiedereinzug zu gewährleisten.

Auch die US2008036115A1 offenbart Entgasungsextruder. Die US2008036115A1 zeigt auch, dass in einem solchen Entgasungsextruder Schneckenelemente verschiedener Art verwendet werden können. Jedoch geht die Offenbarung der US2008036115A1 nicht auf die genannten Nachteile des Stands der Technik ein.

Aufgabe der vorliegenden Erfindung ist es, die genannten Nachteile des Stands der Technik zu überwinden und, einen Extruder zur Verfügung zu stellen, der die genannten Nachteile des Stands der Technik vermeidet.

Überraschenderweise wird die Aufgabe durch einen Extruder mit den Merkmalen des Hauptanspruchs gelöst.

Gegenstand der Erfindung ist daher gemäß Anspruch 1 ein Extruder mit zwei oder mehr gleichsinnig und gleichschnell drehbaren Schneckenwellen, wobei der Extruder mindestens eine Entgasungsöffnung aufweist,

> wobei im Eintrittsbereich dieser mindestens einen Entgasungsöffnung jede Schneckenwelle mindestens je ein Großsteigungsschneckenelement aufweist, das ein Verhältnis X von Steigung T zu Gehäuseinnendurchmesser Di von 1,75 bis 15 aufweist,
> oder
>
> mindestens je ein asymmetrisches Schneckenelement aufweist,
> oder

mindestens je ein exzentrisch auf der Drehachse der Schneckenwelle aufgezogenes Schneckenelement aufweist,

wobei diese Großsteigungsschneckenelemente oder

diese asymmetrischen Schneckenelemente, oder

diese exzentrisch auf der Drehachse der Schneckenwelle aufgezogenen Schneckenelemente, auf unmittelbar benachbarten Schneckenwellen jeweils unmittelbar benachbart gegenüberliegen, wobei der Eintrittsbereich der mindestens einen Entgasungsöffnung ein Abschnitt des Extruders ist, der bezogen auf die in Förderrichtung zuerst liegende Kante der Entgasungsöffnung

(a) 100 % der Länge der Entgasungsöffnung in Förderrichtung und erstreckt entgegen der Förderrichtung, und
(b) 50 % der Länge der Entgasungsöffnung in Förderrichtung und erstreckt in Förderrichtung, überstreicht,
und

ab der in Förderrichtung des Extruders zuerst liegenden Kante der Entgasungsöffnung sich das mindestens je eine Großsteigungsschneckenelement oder

das mindestens je eine asymmetrische Schneckenelement, oder

das mindestens je eine exzentrisch auf der Drehachse der Schneckenwelle aufgezogene Schneckenelement,

0 bis 50 % der Länge der Entgasungsöffnung in die Entgasungsöffnung hinein erstreckt, und

das mindestens je eine Großsteigungsschneckenelement oder

das mindestens je eine asymmetrische Schneckenelement, oder

das mindestens je eine exzentrisch auf der Drehachse der Schneckenwelle aufgezogene Schneckenelement,

in Förderrichtung vor der in Förderrichtung zuerst liegenden Kante der Entgasungsöffnung beginnt und sich mindestens bis an die in Förderrichtung zuerst liegende Kante der Entgasungsöffnung erstreckt,

wobei auf dieses mindestens je einen Großsteigungsschneckenelements oder dieses mindestens je eine asymmetrische Schneckenelement oder auf dieses mindestens je eine exzentrisch auf der Drehachse der Schneckenwelle aufgezogenen Schneckenelements unmittelbar in Förderrichtung mindestens je ein Geringsteigungsschneckenelement folgt, das je ein Verhältnis X von Steigung T zu Gehäuseinnendurchmesser Di von kleiner als 1,5 aufweist.

Es ist dabei für einen Fachmann klar, dass ein mehrwelliger Extruder mit gleichsinnig und gleichschnell drehbaren Schneckenwellen im bestimmungsgemäßen Gebrauch gleichsinnig und gleichschnell drehende Schneckenwellen aufweist.

Im Sinne der vorliegenden Erfindung ist ein Schneckenelement mit einer besonders großen Steigung, nachfolgend auch Großsteigungsschneckenelement genannt, ein Schneckenelement, dass ein Verhältnis X von Steigung T des Schneckenelement zu Gehäuseinnendurchmesser Di des Extruders von 1,75 bis 15 aufweist, also:

$$1,75 \leq X = T \, / \, D \leq 15.$$

Bevorzugt gilt für das Großsteigungsschneckenelement

$$2 \leq X = T \, / \, D \leq 10,$$

und besonders bevorzugt

$$2,5 \leq X = T \, / \, D \leq 5.$$

Dabei ist die Steigung T eines Schneckenelements die axiale Länge, die für eine vollständige Drehung des Schneckenprofils des Schneckenelements erforderlich ist. Der Gehäuseinnendurchmesser Di ist der Innendurchmesser des Querschnitts der Gehäusebohrung, in der sich die jeweilige Schneckenwelle befindet, auf der das betreffende Schneckenelement aufgezogen ist. Ein Mehrwellenextruder weist dabei einer der Anzahl der Wellen entsprechende Anzahl von einander durchdringenden, also einen Zwickel bildenden, kreisförmige Gehäusebohrungen auf, die jeweils einen identischen Gehäuseinnendurchmesser Di haben.

Ein Geringsteigungsschneckenelement im Sinne der vorliegenden Erfindung ist dabei ein Schneckenelement, dass ein Verhältnis X von Steigung T des Schneckenelement zu Gehäuseinnendurchmesser Di des Extruders von kleiner 1,5 aufweist, bevorzugt von 1,2 und weniger aufweist.

Der Begriff "Eintrittsbereich dieser mindestens einen Entgasungsöffnung", wie er oben definiert ist, ist nicht gleich dem Begriff "Bereich einer Entgasungsöffnung" gleichzusetzen. Der Begriff "Bereich einer Entgasungsöffnung" bedeutet dabei das Volumen innerhalb des Extruders einschließlich des inneren Volumens der Entgasungsöffnung, der in Förderrichtung mit der vorderen inneren Kante der Entgasungsöffnung beginnt und mit der hinteren inneren Kante der Entgasungsöffnung endet.

Erfindungsgemäß bevorzugt ist dabei das je eine Großsteigungsschneckenelement gleichzeitig ein asymmetrisches Schneckenelement oder ein exzentrisch auf der Drehachse der Schneckenwelle aufgezogenes Schneckenelement, also das je eine Großsteigungsschneckenelement zusätzlich die Merkmale eines asymmetrischen Schneckenelements oder die Merkmale eines exzentrisch auf der Drehachse der Schneckenwelle aufgezogenes Schneckenelement aufweist.

Diese bevorzugte Ausführungsform des erfindungsgemäßen Extruders stellt eine zweite Ausführungsform nach der oben dargestellten ersten Ausführungsform dar.

Weiter erfindungsgemäß bevorzugt ist dabei das je eine Großsteigungsschneckenelement sowohl gleichzeitig ein asymmetrisches als auch ein exzentrisch auf der Drehachse der Schneckenwelle aufgezogenes Schneckenelement, also das je eine Großsteigungsschneckenelement zusätzlich sowohl die Merkmale eines asymmetrischen Schneckenelements als auch die Merkmale eines exzentrisch auf der Drehachse der Schneckenwelle aufgezogenes Schneckenelement aufweist.

Diese weiter bevorzugte Ausführungsform des erfindungsgemäßen Extruders stellt eine dritte Ausführungsform nach der oben dargestellten ersten Ausführungsform oder der oben dargestellten zweiten Ausführungsform dar.

Erfindungsgemäß besonders bevorzugt ist dabei, dass sich das mindestens je eine Großsteigungsschneckenelement oder das mindestens je eine asymmetrische Schneckenelement oder das mindestens je eine exzentrisch auf der Drehachse der Schneckenwelle aufgezogene Schneckenelement ab der in Förderrichtung des Extruders zuerst liegenden Kante der Entgasungsöffnung höchstens 20 %, bevorzugt höchstens 10 % der Länge der Entgasungsöffnung in die Entgasungsöffnung hinein erstreckt.

Diese besonders bevorzugte Ausführungsform des erfindungsgemäßen Extruders stellt eine vierte Ausführungsform nach einer der oben dargestellten Ausführungsformen dar, insbesondere stellt diese vierte Ausführungsform eine Ausführungsform nach der oben dargestellten ersten Ausführungsform dar.

Weiter erfindungsgemäß besonders bevorzugt ist dabei, dass sich das mindestens je eine Großsteigungsschneckenelement oder das mindestens je eine asymmetrische Schneckenelement oder das mindestens je eine exzentrisch auf der Drehachse der Schneckenwelle aufgezogene Schneckenelement ab der in Förderrichtung des Extruders zuerst liegenden Kante der Entgasungsöffnung mindestens 10 % bis maximal 100 %, bevorzugt mindestens 20 % bis maximal 50 % der Länge des Entgasungsöffnung gegen die Förderrichtung erstreckt.

Diese weiter besonders bevorzugte Ausführungsform des erfindungsgemäßen Extruders stellt eine fünfte Ausführungsform nach einer der oben dargestellten Ausführungsformen dar, insbesondere stellt diese fünfte Ausführungsform eine Ausführungsform nach der oben dargestellten ersten Ausführungsform dar.

Erfindungsgemäß ganz besonders bevorzugt ist dabei, dass im Eintrittsbereich der mindestens einen Entgasungsöffnung jede Schneckenwelle genau ein Schneckenelement aufweist, das ein Großsteigungsschneckenelement oder ein asymmetrisches Schneckenelement oder ein exzentrisch auf der Drehachse der Schneckenwelle aufgezogenes Schneckenelemente ist.

Diese ganz besonders bevorzugte Ausführungsform des erfindungsgemäßen Extruders stellt eine sechste Ausführungsform nach einer der oben dargestellten Ausführungsformen dar, insbesondere stellt diese sechste Ausführungsform eine Ausführungsform nach der oben dargestellten ersten Ausführungsform dar.

In anderen Worten, unabhängig davon, ob das Sonderschneckenelement ein Großsteigungsschneckenelement ist oder ein asymmetrisches Schneckenelement ist oder ein Schneckenelement ist, das exzentrisch auf der Drehachse der Schneckenwelle aufgezogen ist, es folgt danach in dem Abschnitt des Extruders, in dem sich die mindestens eine Entgasungsöffnung befindet, weder ein Großsteigungsschneckenelement, noch ein asymmetrisches Schneckenelement, noch eine Schneckenelement, das exzentrisch auf der Drehachse der Schneckenwelle aufgezogen ist.

Weiter erfindungsgemäß ganz besonders bevorzugt ist dabei, dass die axiale Länge, die das mindestens je eine Großsteigungsschneckenelement oder das mindestens je eine asymmetrische Schneckenelement oder das mindestens je eine exzentrisch auf der Drehachse der Schneckenwelle aufgezogene Schneckenelement aufweist, 0,1 bis 3, bevorzugt 0,5 bis 1 des Gehäuseinnendurchmessers Di beträgt.

Diese weiter ganz besonders bevorzugte Ausführungsform des erfindungsgemäßen Extruders stellt eine siebte Ausführungsform nach einer der oben dargestellten Ausführungsformen dar, insbesondere stellt diese siebte Ausführungsform eine Ausführungsform nach der oben dargestellten ersten Ausführungsform dar.

Dabei gilt erfindungsgemäß, dass wenn zwei oder mehr Schneckenelemente, die ein Großsteigungsschneckenelement oder ein asymmetrisches Schneckenelement oder ein exzentrisch auf der Drehachse der Schneckenwelle aufgezogenes Schneckenelement sind, eine axiale Länge aufweisen, die geringer als 0,5 des Gehäuseinnendurchmessers Di ist, und sind diese zwei oder mehr solcher Schneckenelemente, die ein Großsteigungsschneckenelement oder ein asymmetrisches Schneckenelement oder ein exzentrisch auf der Drehachse der Schneckenwelle aufgezogenes Schneckenelement sind, axial unmittelbar hintereinander angeordnet, so werden diese als ein Schneckenelement, das ein Großsteigungsschneckenelement oder ein asymmetrisches Schneckenelement oder ein exzentrisch auf der Drehachse der Schneckenwelle aufgezogenes Schneckenelement ist, angesehen, soweit die Summe der axialen Längen dieser Schneckenelemente vermindert um die axiale Länge des in Förderrichtung letzten Schneckenelements, das ein Großsteigungsschneckenelement oder ein asymmetrisches Schneckenelement oder ein exzentrisch auf der Drehachse der Schneckenwelle aufgezogenes Schneckenelement ist, 3, also das Dreifache, des Gehäuseinnendurchmessers Di nicht übersteigt.

Dabei gilt außerdem erfindungsgemäß bevorzugt, dass wenn zwei oder mehr Schneckenelemente, die ein Großsteigungsschneckenelement oder ein asymmetrisches Schneckenelement oder ein exzentrisch auf der Drehachse der Schneckenwelle aufgezogenes Schneckenelement sind, eine axiale Länge aufweisen, die geringer als 0,1 des Gehäuseinnendurchmessers Di ist, und sind diese zwei oder mehr solcher Schneckenelemente, die ein Großsteigungsschneckenelement oder ein asymmetrisches Schneckenelement oder ein exzentrisch auf der Drehachse der Schneckenwelle aufgezogenes Schneckenelement sind, axial unmittelbar hintereinander angeordnet, so werden diese als ein Schneckenelement, das ein Großsteigungsschneckenelement oder ein asymmetrisches Schneckenelement oder ein exzentrisch auf der Drehachse der Schneckenwelle aufgezogenes Schneckenelement ist, angesehen, soweit die Summe der axialen Längen dieser Schneckenelemente vermindert um die axiale Länge des in Förderrichtung letzten Schneckenelements, das ein Großsteigungsschneckenelement oder ein asymmetrisches Schneckenelement oder ein exzentrisch auf der Drehachse der Schneckenwelle aufgezogenes Schneckenelement ist, 1, also das Einfache, des Gehäuseinnendurchmessers Di nicht übersteigt.

Sowohl für den erfindungsgemäßen als auch für den erfindungsgemäß bevorzugten Fall gilt dabei, dass Distanzscheiben, die zwischen zwei oder mehr solcher axial unmittelbar hintereinander angeordneten Schneckenelementen, die ein Großsteigungsschneckenelement oder ein asymmetrisches Schneckenelement oder ein exzentrisch auf der Drehachse der Schneckenwelle aufgezogenes Schneckenelement sind, angeordnet sind, nicht mit betrachtet werden, das heißt, befindet oder befinden sich zwischen zwei axial hintereinander angeordneten Schneckenelementen, die ein Großsteigungsschneckenelement oder ein asymmetrisches Schneckenelement oder ein exzentrisch auf der Drehachse der Schneckenwelle aufgezogenes Schneckenelement sind, ein oder mehrere Distanzscheiben, so werden diese zwei Schneckenelemente als unmittelbar hintereinander angeordnete Schneckenelemente, die ein Großsteigungsschneckenelement oder ein asymmetrisches Schneckenelement oder ein exzentrisch auf der Drehachse der Schneckenwelle aufgezogenes Schneckenelement sind, betrachtet.

Erfindungsgemäß insbesondere bevorzugt ist dabei, dass das mindestens je eine Schneckenelement, das ein Großsteigungsschneckenelement oder ein asymmetrisches Schneckenelement oder ein exzentrisch auf der Drehachse der Schneckenwelle aufgezogenes Schneckenelement ist, ein Förderelement ist.

Diese insbesondere bevorzugte Ausführungsform des erfindungsgemäßen Extruders stellt eine achte Ausführungsform nach einer der oben dargestellten Ausführungsformen dar, insbesondere stellt diese achte Ausführungsform eine Ausführungsform nach der oben dargestellten ersten Ausführungsform dar.

Weiter erfindungsgemäß insbesondere bevorzugt ist dabei, dass das mindestens je eine Großsteigungsschneckenelement (3.4) oder das mindestens je eine asymmetrische Schneckenelement (4.4) oder das mindestens je eine exzentrisch auf der Drehachse der Schneckenwelle aufgezogene Schneckenelement ein eingängiges Schneckenelement, ein zweigängiges Schneckenelement, ein dreigängiges Schneckenelement oder ein viergängiges Schneckenelement, bevorzugt ein zweigängiges Schneckenelement ist.

Diese weiter insbesondere bevorzugte Ausführungsform des erfindungsgemäßen Extruders stellt eine neunte Ausführungsform nach einer der oben dargestellten Ausführungsformen dar, insbesondere stellt diese neunte Ausführungsform eine Ausführungsform nach der oben dargestellten ersten Ausführungsform dar.

Erfindungsgemäß ganz insbesondere bevorzugt ist dabei, dass im Eintrittsbereich der mindestens einen Entgasungsöffnung jede Schneckenwelle mindestens ein Schneckenelement aufweist, das weder ein Großsteigungsschneckenelement (3.4) noch ein asymmetrisches Schneckenelement (4.4) noch ein exzentrisch auf der Drehachse der Schneckenwelle aufgezogenes Schneckenelement ist; vorzugsweise ist dieses Schneckenelement ein Förderelement.

Diese ganz insbesondere bevorzugte Ausführungsform des erfindungsgemäßen Extruders stellt eine zehnte Ausführungsform nach einer der oben dargestellten Ausführungsformen dar, insbesondere stellt diese zehnte Ausführungsform eine Ausführungsform nach der oben dargestellten ersten Ausführungsform dar.

Dabei ist weiter ganz insbesondere erfindungsgemäß bevorzugt, dass ein Schneckenelement, das weder ein Großsteigungsschneckenelement noch ein asymmetrisches Schneckenelement noch ein exzentrisch auf der Drehachse der Schneckenwelle aufgezogenes Schneckenelement ist, eine axiale Länge aufweist, die 0,1 bis 3, bevorzugt 0,5 bis 1,5 des Gehäuseinnendurchmessers Di beträgt; vorzugsweise ist dieses Schneckenelement ein eingängiges Schneckenelement, ein zweigängiges Schneckenelement, ein dreigängiges Schneckenelement oder ein viergängiges Schneckenelement ist, bevorzugt ist es ein zweigängiges Schneckenelement, weiter vorzugsweise ist dieses Schneckenelement ein Förderelement.

Diese weiter ganz insbesondere bevorzugte Ausführungsform des erfindungsgemäßen Extruders stellt eine elfte Ausführungsform nach der oben dargestellten zehnten Ausführungsform dar.

Erfindungsgemäß außerdem bevorzugt ist, dass die Länge der Entgasungsöffnung in Förderrichtung von 50 bis 750 % des Gehäuseinnendurchmessers Di des Extruders beträgt.

Diese außerdem bevorzugte Ausführungsform des erfindungsgemäßen Extruders stellt eine zwölfte Ausführungsform nach einer der oben dargestellten Ausführungsformen dar, insbesondere stellt diese zwölfte Ausführungsform eine Ausführungsform nach der oben dargestellten ersten Ausführungsform dar.

Weiter erfindungsgemäß außerdem bevorzugt ist, dass die Querschnittsfläche der Entgasungsöffnung von 50 bis 1400 % des Quadrats des Gehäuseinnendurchmessers Di des Extruders beträgt.

Diese weiter außerdem bevorzugte Ausführungsform des erfindungsgemäßen Extruders stellt eine dreizehnte Ausführungsform nach einer der oben dargestellten Ausführungsformen dar, insbesondere stellt diese dreizehnte Ausführungsform eine Ausführungsform nach der oben dargestellten ersten Ausführungsform dar.

Mit dem erfindungsgemäßen Extruder wird vermieden, dass Polymer an der äußeren Kante der Entgasungsöffnung, die parallel zur abwärtsdrehenden Schneckenflanke verläuft, nicht vollständig wieder eingezogen wird und es so zu Ablagerungen des Polymers kommt.

Dadurch wird auch die Gefahr einer breitere Verweilzeitverteilung des Polymers im Mehrwellenextruder verringert, sodass die gewünschten Eigenschaften des Polymers leichter erreicht werden können. Außerdem wird beim erfindungsgemäßen Extruder der Durchsatz des Mehrwellenextruders im Bereich der Entgasungsöffnung befördert, wodurch auch der Gesamtdurchsatz des Mehrwellenextruders befördert wird und damit wiederum auch das Verhältnis von Gesamtdurchsatz des Mehrwellenextruder zu verbrauchter Antriebsenergie für die Schneckenwellen erhöht wird.

Gegenstand der vorliegenden Erfindung ist gemäss Anspruch 14 auch die Verwendung des erfindungsgemäßen Extruders zur Herstellung und Verarbeitung, von plastischen Massen.

Auch durch diesen weiteren Gegenstand der vorliegenden Erfindung wird die eingangs gestellte Aufgabe gelöst.

Im Sinne der vorliegenden Erfindung wird unter einer mehrwelligen Extruder ein Extruder mit mehr als einer Schneckenwelle verstanden, beispielsweise ein Extruder mit zwei, drei oder vier Schneckenwellen oder auch ein Extruder mit acht bis sechzehn, insbesondere zwölf, ringförmig angeordneten Schneckenwellen. Bei mehr als zwei Schneckenwellen können die Drehachsen der Schneckenwellen nebeneinander, in einem Vieleck mit einer Anzahl Ecken gleich der Anzahl der Wellen, oder beispielsweise auch - wie bei einem sogenannten Ringextruder - ringförmig zueinander angeordnet sein. Bei Mehrwellenextrudern sind die Drehachsen der Schneckenwellen in aller Regel parallel zueinander angeordnet, sie können aber auch nichtparallel angeordnet sein. Ein solcher Extruder mit mehr als einer Schneckenwelle wird nachfolgend auch mehrwellige Schneckenmaschine, Mehrwellenschneckenmaschine oder Mehrwellenextruder genannt. Eine zweiwellige Schneckenmaschine wird nachfolgend auch Doppelschneckenextruder genannt. Im Sinne der vorliegenden Erfindung wird der Begriff "Extruder" gleichbedeutend mit dem Begriff "Schneckenmaschine" gebraucht. Bevorzugt handelt es sich bei dem erfindungsgemäßen Mehrwellenextruder um einen Extruder mit gleichschnell und gleichsinnig drehbaren Schneckenwellen. Besonders bevorzugt handelt es sich bei dem erfindungsgemäßen Mehrwellenextruder um einen Doppelschneckenextruder mit gleichschnell und gleichsinnig drehbaren Schneckenwellen oder um einen Mehrwellenextruder mit mehreren - insbesondere acht oder zwölf - ringförmig zueinander angeordneten, gleichschnell und gleichsinnig drehbaren Schneckenwellen, ganz besonders bevorzugt handelt es sich bei dem erfindungsgemäßen Mehrwellenextruder um einen Doppelschneckenextruder mit gleichschnell und gleichsinnig drehbaren Schneckenwellen, insbesondere sind diese Schneckenwellen parallel zueinander angeordnet.

Üblicherweise werden Schneckenwellen für mehrwellige Mehrwellenextruder nach dem Stand der Technik modular aus Schneckenelementen aufgebaut, die auf eine Kernwelle aufgezogen werden. Beim erfindungsgemäßen Extruder sind im Bereich der mindestens einen Entgasungsöffnung die Schneckenelemente mit einer besonders großen Steigung in einer Anzahl, die der Anzahl der Schneckenwellen des jeweiligen Extruders entspricht, auf den Schneckenwellen gegenüberliegend angeordnet. Die Schneckenelemente, die ein Großsteigungsschneckenelement oder ein asymmetrisches Schneckenelement oder ein exzentrisch auf der Drehachse der Schneckenwelle aufgezogenes Schneckenelement sind, können dabei gleiche oder unterschiedliche Schneckenprofile aufweisen.

Die Schneckenelemente, die ein Großsteigungsschneckenelement oder ein asymmetrisches Schneckenelement oder ein exzentrisch auf der Drehachse der Schneckenwelle aufgezogenes Schneckenelement sind, können in dem erfindungsgemäßen Extruder in Form von Knet-, Förder- oder Mischelementen vorliegen, bevorzugt sind die Schneckenelemente, die ein Großsteigungsschneckenelement oder ein asymmetrisches Schneckenelement oder ein exzentrisch auf der Drehachse der Schneckenwelle aufgezogenes Schneckenelement sind, Förderelemente.

Im Falle von Knetelementen ist die Steigung T die Summe der axialen Längen von unmittelbar hintereinander gereihten Knetscheiben, die für eine vollständige Drehung des Knetscheibenprofils erforderlich ist.

Im Sinn der vorliegenden Erfindung wir unter dem Begriff "Knetscheibenprofil", auch "Knetscheibenquerschnittsprofil" genannt, die äußere Kontur einer Knetscheibe im Querschnitt rechtwinklig zur Drehachse der Knetscheibe verstanden.

Ein Förderelement zeichnet sich bekanntlich dadurch aus (siehe zum Beispiel [1], Seiten 227 - 248), dass ein Schneckenprofil in Achsrichtung kontinuierlich schraubenförmig verdreht und fortgesetzt wird. Dabei kann das Förderelement rechts- oder linksgängig sein.

Ein Knetelement zeichnet sich bekanntlich dadurch aus (siehe zum Beispiel [1], Seiten 227 - 248), dass ein Schneckenprofil in Achsrichtung absatzweise in Form von Knetscheiben fortgeführt wird. Die Anordnung der Knetscheiben kann rechts- oder linksgängig oder neutral erfolgen.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Die Durchbrüche haben bevorzugt die Form einer u- oder v-förmigen Nut, die bevorzugt gegenfördernd oder achsparallel angeordnet sind.

Ein Schneckenelement, das ein Großsteigungsschneckenelement oder ein asymmetrisches Schneckenelement oder ein exzentrisch auf der Drehachse der Schneckenwelle aufgezogenes Schneckenelement ist, kann auch als Übergangselement ausgestaltete sein, das heißt, dass das Schneckenprofil an einer Stelle der axialen Ausdehnung des Schneckenelement ein anderes ist als an einer anderen Stelle der axialen Ausdehnung des Schneckenelements, wobei sich diese verschiedenen Profile nicht durch Drehung ineinander überführen lassen.

Schneckenelemente, die ein Großsteigungsschneckenelement oder ein asymmetrisches Schneckenelement oder ein exzentrisch auf der Drehachse der Schneckenwelle aufgezogenes Schneckenelement sind, und die auf sich auf benachbarten Schneckenwellen gegenüberliegen, reinigen sich - unter Berücksichtigung der technisch notwendigen Spiele - bevorzugt gegenseitig ab. Es können aber auch auf benachbarten Schneckenwellen gegenüberliegende Schneckenelemente, die ein Großsteigungsschneckenelement oder ein asymmetrisches Schneckenelement oder ein exzentrisch auf der Drehachse der Schneckenwelle aufgezogenes Schneckenelement sind, verwendet werden, die sich nicht exakt abreinigen.

Im Sinne der vorliegenden Erfindung werden unter plastischen Massen insbesondere verstanden: Suspensionen, Pasten, Glasschmelzen, ungebrannte Keramiken, Metallschmelzen, oder Kunststoffe.

Im Sinne der vorliegenden Erfindung werden unter Kunststoffen insbesondere verstanden: Polymere, insbesondere Polymerschmelzen oder Polymerlösungen, wiederum insbesondere Schmelzen oder Lösungen von thermoplastischen Polymeren oder Schmelzen oder Lösungen von Kautschuken.

Als thermoplastisches Polymer wird bevorzugt wenigstens eines aus der Reihe Polycarbonat, Polyamid, Polyester, insbesondere Polybutylenterephthalat und Polyethylenterephthalat, Polylactide, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid eingesetzt. Ebenso bevorzugt eingesetzt werden so genannte Blends aus den aufgeführten Polymeren, worunter der Fachmann eine Kombination aus zwei oder mehreren Polymeren versteht.

Besonders bevorzugt sind Polycarbonat und Mischungen enthaltend Polycarbonat, ganz besonders bevorzugt Polycarbonat, beispielsweise erhalten nach dem Phasengrenzflächenverfahren oder dem Schmelzeumesterungsverfahren.

Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk eingesetzt. Eine Kombination von zwei oder mehreren der aufgeführten Kautschuke, oder eine Kombination aus einem oder mehreren Kautschuk mit einem oder mehreren anderen Kunststoffen ist natürlich auch möglich. Diese Thermoplaste oder Kautschuke können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern.

Die Erfindung wird nachstehend anhand der Figuren beispielhaft näher erläutert.

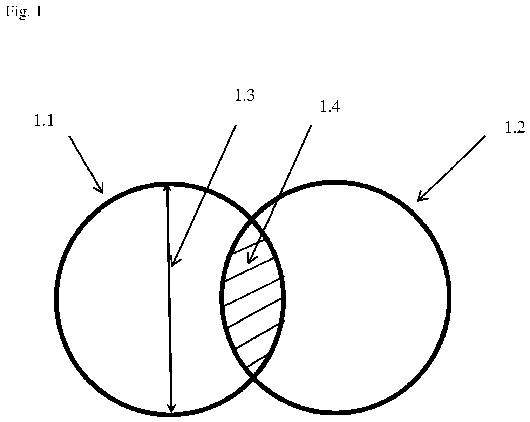

Figur 1 zeigt einen Querschnitt der beiden Gehäusebohrungen eines Doppelschneckenextruders, wobei die beiden Gehäusebohrungen den gleichen Gehäuseinnendurchmesser Di, einander durchdringen und dabei einen Zwickel bilden. Der Gehäuseinnendurchmesser Di einer der Gehäusebohrungen ist eingezeichnet. Der Querschnitt der ersten Gehäusebohrung ist dabei mit 1.1 bezeichnet, der Querschnitt der zweiten Gehäusebohrung ist mit 1.2 bezeichnet, der Innendurchmesser Di der ersten Gehäusebohrung ist mit 1.3 bezeichnet und der Zwickel ist mit 1.4 bezeichnet.

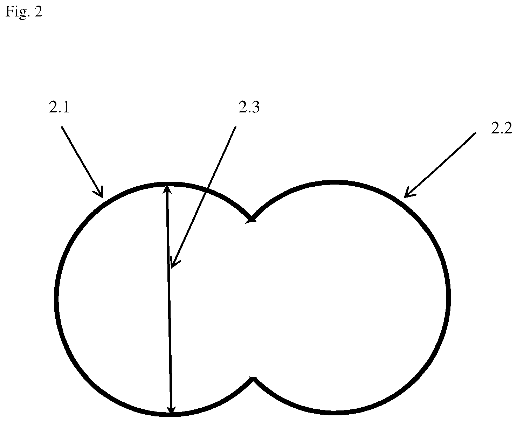

Figur 2 zeigt den Querschnitt aus Figur 1 ohne eingezeichneten Zwickel. Auch hier ist der Gehäuseinnendurchmesser Di einer der Gehäusebohrungen eingezeichnet. Der Gehäuseinnendurchmesser Di einer der Gehäusebohrungen ist eingezeichnet. Der Querschnitt der ersten Gehäusebohrung ist dabei mit 2.1 bezeichnet, der Querschnitt der zweiten Gehäusebohrung ist mit 2.2 bezeichnet und der Innendurchmesser Di der ersten Gehäusebohrung ist mit 3.3 bezeichnet

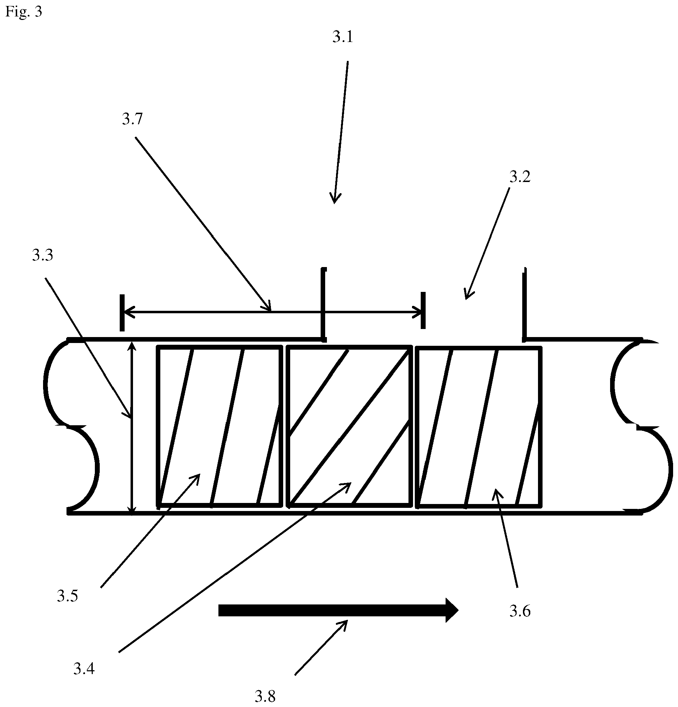

Figur 3 zeigt einen Längsschnitt durch einen Abschnitt eines erfindungsgemäßen Entgasungsextruders, wobei dieser Abschnitt sowohl eine Entgasungsöffnung als auch ein Großsteigungsschneckenelement zeigt. Der Abschnitt des erfindungsgemäßen Entgasungsextruders ist dabei mit 3.1 bezeichnet, die Entgasungsöffnung ist mit 3.2 bezeichnet, der Gehäuseinnendurchmesser ist mit 3.3 bezeichnet, das Großsteigungsschneckenelement ist mit 3.4 bezeichnet, das in Förderrichtung vor dem Großsteigungsschneckenelement liegende Geringsteigungsschneckenelement ist mit 3.5 bezeichnet, das in Förderrichtung hinter dem Großsteigungsschneckenelement liegende Geringsteigungsschneckenelement ist mit 3.6 bezeichnet, die Länge des Eintrittsbereich der Entgasungsöffnung ist mit 3.7 bezeichnet und die Förderrichtung ist mit 3.8 bezeichnet.

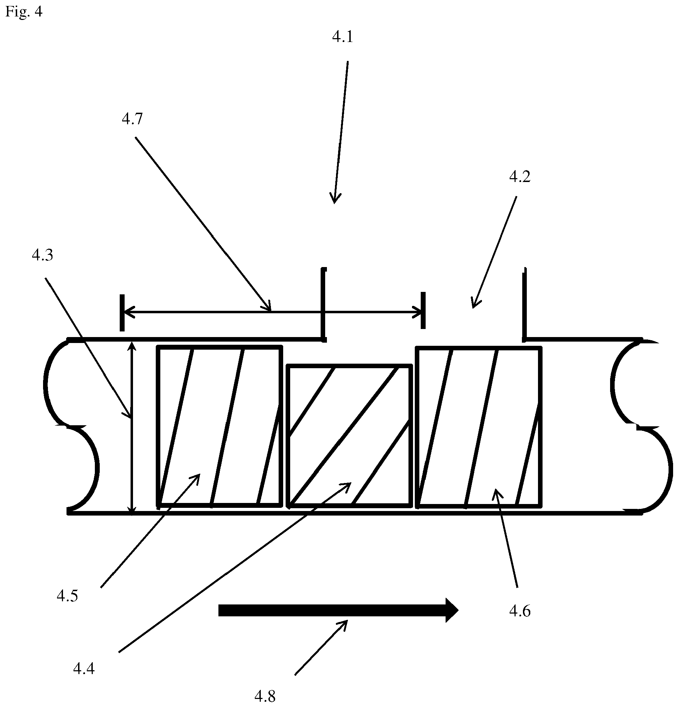

Figur 4 zeigt einen Längsschnitt durch einen Abschnitt eines erfindungsgemäßen Entgasungsextruders, wobei dieser Abschnitt sowohl eine Entgasungsöffnung als auch ein asymmetrisches Schneckenelement zeigt. Der Abschnitt des erfindungsgemäßen Entgasungsextruders ist dabei mit 4.1 bezeichnet, die Entgasungsöffnung ist mit 4.2 bezeichnet, der Gehäuseinnendurchmesser ist mit 4.3 bezeichnet, das asymmetrische Schneckenelement ist mit 4.4 bezeichnet, das in Förderrichtung vor dem asymmetrischen Schneckenelement liegende nicht-asymmetrische Schneckenelement ist mit 4.5 bezeichnet, das in Förderrichtung hinter dem asymmetrischen Schneckenelement liegende nicht-asymmetrische Schneckenelement ist mit 4.6 bezeichnet, die Länge des Eintrittsbereich der Entgasungsöffnung ist mit 4.7 bezeichnet und die Förderrichtung ist mit 4.8 bezeichnet. Das asymmetrischen Schneckenelement ist gleichzeitig ein Schneckenelement, das exzentrisch auf der Drehachse der Schneckenwelle aufgezogen ist.

## Patentansprüche

1. Extruder mit zwei oder mehr gleichsinnig und gleichschnell drehbaren Schneckenwellen, wobei der Extruder mindestens eine Entgasungsöffnung (3.2; 4.2) aufweist,

    wobei im Eintrittsbereich dieser mindestens einen Entgasungsöffnung (3.2; 4.2) jede Schneckenwelle
    mindestens je ein Großsteigungsschneckenelement (3.4) aufweist, das ein Verhältnis X von Steigung T zu Gehäuseinnendurchmesser Di (3.3; 4.3) von 1,75 bis 15 aufweist,
    oder
    mindestens je ein asymmetrisches Schneckenelement (4.4) aufweist,
    oder
    mindestens je ein exzentrisch auf der Drehachse der Schneckenwelle aufgezogenes Schneckenelement aufweist,
    wobei diese Großsteigungsschneckenelemente (3.4)
    oder
    diese asymmetrischen Schneckenelemente (4.4),
    oder
    diese exzentrisch auf der Drehachse der Schneckenwelle aufgezogenen Schneckenelemente, auf unmittelbar benachbarten Schneckenwellen jeweils unmittelbar benachbart gegenüberliegen,
    wobei der Eintrittsbereich der mindestens einen Entgasungsöffnung (3.2; 4.2) ein Abschnitt des Extruders ist, der bezogen auf die in Förderrichtung (3.8; 4.8) zuerst liegende Kante der Entgasungsöffnung (3.2; 4.2)

        (a) 100 % der Länge der Entgasungsöffnung (3.2; 4.2) in Förderrichtung (3.8; 4.8) und erstreckt entgegen der Förderrichtung (3.8; 4.8), und
        (b) 50 % der Länge der Entgasungsöffnung (3.2; 4.2) in Förderrichtung (3.8; 4.8) und erstreckt in Förderrichtung (3.8; 4.8),

überstreicht,
und
ab der in Förderrichtung (3.8; 4.8) des Extruders zuerst liegenden Kante der Entgasungsöffnung (3.2; 4.2) sich das mindestens je eine Großsteigungsschneckenelement (3.4)
oder
das mindestens je eine asymmetrische Schneckenelement (4.4),
oder
das mindestens je eine exzentrisch auf der Drehachse der Schneckenwelle aufgezogene Schneckenelement,
0 bis 50 % der Länge der Entgasungsöffnung (3.2; 4.2) in die Entgasungsöffnung (3.2; 4.2) hinein erstreckt,
und
das mindestens je eine Großsteigungsschneckenelement (3.4)
oder
das mindestens je eine asymmetrische Schneckenelement (4.4),
oder
das mindestens je eine exzentrisch auf der Drehachse der Schneckenwelle aufgezogene Schneckenelement,
in Förderrichtung (3.8; 4.8) vor der in Förderrichtung (3.8; 4.8) zuerst liegenden Kante der Entgasungsöffnung (3.2; 4.2) beginnt und sich mindestens bis an die in Förderrichtung (3.8; 4.8) zuerst liegende Kante der Entgasungsöffnung (3.2; 4.2) erstreckt,
wobei auf dieses mindestens je eine Großsteigungsschneckenelement (3.4) oder dieses mindestens je eine asymmetrische Schneckenelement (4.4) oder auf dieses mindestens je eine exzentrisch auf der Drehachse der Schneckenwelle aufgezogene Schneckenelement unmittelbar in Förderrichtung (3.8; 4.8) mindestens je ein Geringsteigungsschneckenelement folgt (3.6), das je ein Verhältnis X von Steigung T zu Gehäuseinnendurchmesser Di (3.3; 4.3) von kleiner als 1,5 aufweist.

2. Extruder nach Anspruch 1, wobei das je eine Großsteigungsschneckenelement (3.4) gleichzeitig ein asymmetrisches Schneckenelement (4.4) oder ein exzentrisch auf der Drehachse der Schneckenwelle aufgezogenes Schneckenelement ist.

3. Extruder nach Anspruch 1 oder Anspruch 2, wobei das je eine Großsteigungsschneckenelement (3.4) sowohl gleichzeitig ein asymmetrisches Schneckenelement (4.4) als auch ein exzentrisch auf der Drehachse der Schneckenwelle aufgezogenes Schneckenelement ist.

4. Extruder nach einem der Ansprüche 1 bis 3, wobei sich das mindestens je eine Großsteigungsschneckenelement (3.4) oder das mindestens je eine asymmetrische Schneckenelement (4.4) oder das mindestens je eine exzentrisch auf der Drehachse der Schneckenwelle aufgezogene Schneckenelement ab der in Förderrichtung (3.8; 4.8) des Extruders zuerst liegenden Kante der Entgasungsöffnung (3.2; 4.2) höchstens 20 %, bevorzugt höchstens 10 % der Länge der Entgasungsöffnung (3.2; 4.2) in die Entgasungsöffnung (3.2; 4.2) hinein erstreckt.

5. Extruder nach einem der Ansprüche 1 bis 4, wobei sich das mindestens je eine Großsteigungsschneckenelement (3.4) oder das mindestens je eine asymmetrische Schneckenelement (4.4) oder das mindestens je eine exzentrisch auf der Drehachse der Schneckenwelle aufgezogene Schneckenelement ab der in Förderrichtung (3.8; 4.8) des Extruders zuerst liegenden Kante der Entgasungsöffnung (3.2; 4.2) mindestens 10 % bis maximal 100 %, bevorzugt mindestens 20 % bis maximal 50 % der Länge des Entgasungsöffnung (3.2; 4.2) gegen die Förderrichtung (3.8; 4.8) erstreckt.

6. Extruder nach einem der Ansprüche 1 bis 5, wobei im Eintrittsbereich der mindestens einen Entgasungsöffnung jede Schneckenwelle genau ein Schneckenelement aufweist, das ein Großsteigungsschneckenelement oder ein asymmetrisches Schneckenelement oder ein exzentrisch auf der Drehachse der Schneckenwelle aufgezogenes Schneckenelemente ist.

7. Extruder nach einem der Ansprüche 1 bis 6, wobei die axiale Länge, die das mindestens je eine Großsteigungsschneckenelement (3.4) oder das mindestens je eine asymmetrische Schneckenelement (4.4) oder das mindestens je eine exzentrisch auf der Drehachse der Schneckenwelle aufgezogene Schneckenelement aufweist, 0,1 bis 3, bevorzugt 0,5 bis 1 des Gehäuseinnendurchmessers Di (3.3; 4.3) beträgt.

8. Extruder nach einem der Ansprüche 1 bis 7, wobei das mindestens je eine Schneckenelement, das ein Großsteigungsschneckenelement oder ein asymmetrisches Schneckenelement oder ein exzentrisch auf der Drehachse der Schneckenwelle aufgezogenes Schneckenelement ist, ein Förderelement ist.

9. Extruder nach einem der Ansprüche 1 bis 8, wobei das mindestens je eine Großsteigungsschneckenelement (3.4) oder das mindestens je eine asymmetrische Schneckenelement (4.4) oder das mindestens je eine exzentrisch auf der Drehachse der Schneckenwelle aufgezogene Schneckenelement ein eingängiges Schneckenelement, ein zweigängiges Schneckenelement, ein dreigängiges Schneckenelement oder ein viergängiges Schneckenelement, bevorzugt ein zweigängiges Schneckenelement ist.

10. Extruder nach einem der Ansprüche 1 bis 9, wobei im Eintrittsbereich der mindestens einen Entgasungsöffnung jede Schneckenwelle mindestens ein Schneckenelement aufweist, das weder ein Großsteigungsschneckenelement (3.4) noch ein asymmetrisches Schneckenelement (4.4) noch ein exzentrisch auf der Drehachse der Schneckenwelle aufgezogenes Schneckenelement ist.

11. Extruder nach Anspruch 10, wobei das mindestens eine auf jeder Schneckenwelle im Eintrittsbereich der mindestens einen Entgasungsöffnung befindliche Schneckenelement, das weder ein Großsteigungsschneckenelement (3.4) noch ein asymmetrisches Schneckenelement (4.4) noch ein exzentrisch auf der Drehachse der Schneckenwelle aufgezogenes Schneckenelement ist, eine axiale Länge aufweist, die 0,1 bis 3, bevorzugt 0,5 bis 1,5 des Gehäuseinnendurchmessers Di (3.3; 4.3) beträgt.

12. Extruder nach einem der Ansprüche 1 bis 11, wobei die Länge der Entgasungsöffnung (3.2; 4.2) in Förderrichtung (3.8; 4.8) von 50 bis 750 % des Gehäuseinnendurchmessers Di (3.3; 4.3) des Extruders beträgt.

13. Extruder nach einem der Ansprüche 1 bis 12, wobei die Querschnittsfläche der Entgasungsöffnung (3.2; 4.2) von 50 bis 1400 % des Quadrats des Gehäuseinnendurchmessers Di (3.3; 4.3) des Extruders beträgt.

14. Verwendung eines Extruders nach einem der Ansprüche 1 bis 13 zur Herstellung und Verarbeitung von plastischen Massen.

15. Verwendung nach Anspruch 14 zur Entgasung von plastischen Massen oder zur Herstellung und Verarbeitung von plastischen Massen, die Schmelzen oder Lösungen von thermoplastischen Polymeren oder Schmelzen oder Lösungen von Kautschuken sind.

**Claims**

1. Extruder having two or more screw shafts rotatable in the same sense and at the same speed,

    wherein the extruder has at least one vent (3.2; 4.2),

wherein, in the entry region of this at least one vent (3.2; 4.2), each screw shaft

has at least one high-pitch screw element (3.4) having a ratio X of pitch T to inner housing diameter Di (3.3; 4.3) of 1.75 to 15,
or
has at least one asymmetric screw element (4.4),
or
has at least one screw element mounted eccentrically on the axis of rotation of the screw shaft,
wherein these high-pitch screw elements (3.4)
or
these asymmetric screw elements (4.4),
or
these screw elements mounted eccentrically on the axis of rotation of the screw shaft are each immediately adjacent and opposite one another on immediately adjacent screw shafts,
wherein the entry region of the at least one vent (3.2; 4.2) is a section of the extruder which, based on the first edge of the vent (3.2; 4.2) in conveying direction (3.8; 4.8), covers

    (a) 100% of the length of the vent (3.2; 4.2) in conveying direction (3.8; 4.8) and extends counter to conveying direction (3.8; 4.8), and
    (b) 50% of the length of the vent (3.2; 4.2) in conveying direction (3.8; 4.8) and extends in conveying direction (3.8; 4.8),
    and

from the first edge of the vent (3.2; 4.2) in conveying direction (3.8; 4.8) of the extruder, the at least one high-pitch screw element (3.4) in each case,
or
the at least one asymmetric screw element (4.4) in each case,
or
the at least one screw element mounted eccentrically on the axis of rotation of the screw shaft in each case,
extends into the vent (3.2; 4.2) for 0% to 50% of the length of the vent (3.2; 4.2),
and
the at least one high-pitch screw element (3.4) in each case,
or
the at least one asymmetric screw element (4.4) in each case,
or
the at least one screw element mounted eccentrically on the axis of rotation of the screw shaft in each case,
commences in conveying direction (3.8; 4.8) before the first edge of the vent (3.2; 4.2) in conveying direction (3.8; 4.8) and extends at least to the first edge of the vent (3.2; 4.2) in conveying direction (3.8; 4.8),
wherein this at least one high-pitch screw element (3.4) in each case or this at least one asymmetric screw element (4.4) in each case or this at least one screw element mounted eccentrically on the axis of rotation of the screw shaft in each case is followed directly in conveying direction (3.8; 4.8) by at least one low-pitch screw element (3.6) in each case having a ratio X of pitch T to inner housing diameter Di (3.3; 4.3) of less than 1.5.

2. Extruder according to Claim 1, wherein each high-pitch screw element (3.4) is simultaneously an asymmetric screw element (4.4) or a screw element mounted eccentrically on the axis of rotation of the screw shaft.

3. Extruder according to Claim 1 or Claim 2, wherein each high-pitch screw element (3.4) is simultaneously both an asymmetric screw element (4.4) and a screw element mounted eccentrically on the axis of rotation of the screw shaft.

4. Extruder according to any of Claims 1 to 3, wherein the at least one high-pitch screw element (3.4) in each case or the at least one asymmetric screw element (4.4) in each case or the at least one screw element mounted eccentrically on the axis of rotation of the screw shaft in each case, from the first edge of the vent (3.2; 4.2) in conveying direction (3.8; 4.8) of the extruder, extends into the vent (3.2; 4.2) for not more than 20%, preferably not more than 10% of the length of the vent (3.2; 4.2) .

5. Extruder according to any of Claims 1 to 4, wherein the at least one high-pitch screw element (3.4) in each case or the at least one asymmetric screw element (4.4) in each case or the at least one screw element mounted eccentrically on the axis of rotation of the screw shaft in each case, from the first edge of the vent (3.2; 4.2) in conveying direction (3.8; 4.8) of the extruder, extends for at least 10% to a maximum of 100%, preferably at least 20% to a maximum of 50%, of the length of the vent (3.2; 4.2) counter to conveying direction (3.8; 4.8) .

6. Extruder according to any of Claims 1 to 5, wherein, in the entry region of the at least one vent, each screw shaft has exactly one screw element which is a high-pitch screw element or an asymmetric screw element or a screw element mounted eccentrically on the axis of rotation of the screw shaft.

7. Extruder according to any of Claims 1 to 6, wherein the axial length of the at least one high-pitch screw element (3.4) in each case or the at least one asymmetric screw element (4.4) in each case or the at least one screw element mounted eccentrically on the axis of rotation of the screw shaft in each case is 0.1 to 3, preferably 0.5 to 1, of the inner housing diameter Di (3.3; 4.3).

8. Extruder according to any of Claims 1 to 7, wherein the at least one screw element in each case which is a high-pitch screw element or an asymmetric screw element or a screw element mounted eccentrically on the axis of rotation of the screw shaft is a conveying element.

9. Extruder according to any of Claims 1 to 8, wherein the at least one high-pitch screw element (3.4) in each case or the at least one asymmetric screw element (4.4) in each case or the at least one screw element mounted eccentrically on the axis of rotation of the screw shaft in each case is a single-flight screw element, a double-flight screw element, a triple-flight screw element or a quadruple-flight screw element, preferably a double-flight screw element.

10. Extruder according to any of Claims 1 to 9, wherein, in the entry region of the at least one vent, each screw shaft has at least one screw element which is neither a high-pitch screw element (3.4) nor an asymmetric screw element (4.4) nor a screw element mounted eccentrically on the axis of rotation of the screw shaft.

11. Extruder according to Claim 10, wherein the at least one screw element present on each screw shaft in the entry region of the at least one vent which is neither a high-pitch screw element (3.4) nor an asymmetric screw element (4.4) nor a screw element mounted eccentrically on the axis of rotation of the screw shaft has an axial length which is 0.1 to 3, preferably 0.5 to 1.5, of the inner housing diameter Di (3.3; 4.3).

12. Extruder according to any of Claims 1 to 11, wherein the length of the vent (3.2; 4.2) in conveying direction (3.8; 4.8) is from 50% to 750% of the inner housing diameter Di (3.3; 4.3) of the extruder.

13. Extruder according to any of Claims 1 to 12, wherein the cross-sectional area of the vent (3.2; 4.2) is from 50% to 1400% of the square root of the inner housing diameter Di (3.3; 4.3) of the extruder.

14. Use of an extruder according to any of Claims 1 to 13 for production and processing of plastic masses.

15. Use according to Claim 14 for devolatilization of plastic masses or for production and processing of plastic masses that are melts or solutions of thermoplastic polymers or melts or solutions of rubbers.

## Revendications

1. Extrudeuse comprenant deux arbres à vis sans fin ou plus qui tournent dans le même sens et à la même vitesse, l'extrudeuse comportant au moins une ouverture de dégazage (3.2 ; 4.2),

   chaque arbre à vis sans fin comportant, dans la zone d'entrée de cette au moins une ouverture de dégazage (3.2 ; 4.2), au moins un élément à vis sans fin à grand pas (3.4) qui présente un rapport X du pas T au diamètre de boîtier intérieur Di (3.3 ; 4.3) de 1,75 à 15, ou comportant au moins un élément à vis sans fin asymétrique (4.4), ou comportant au moins un élément à vis sans fin qui est monté excentriquement sur l'axe de rotation de l'arbre à vis sans fin, ces éléments à vis sans fin à grand pas (3.4) ou ces éléments à vis sans fin asymétriques (4.4) ou ces éléments à vis sans fin qui sont montés excentriquement sur l'axe de rotation de l'arbre à vis sans fin, étant opposés les uns aux autres de manière directement adjacente sur des arbres à vis sans fin directement adjacents, la zone d'entrée de l'au moins une ouverture de dégazage (3.2 ; 4.2) étant une portion de l'extrudeuse qui, par rapport au premier bord de l'ouverture de dégazage (3.2 ; 4.2) dans la direction de transport (3.8 ; 4.8),

   (a) couvre 100 % de la longueur de l'ouverture de dégazage (3.2 ; 4.2) dans le sens de transport (3.8 ; 4.8) et s'étend dans le sens opposé au sens de transport (3.8 ; 4.8), et
   (b) couvre 50 % de la longueur de l'ouverture de dégazage (3.2 ; 4.2) dans le sens de transport (3.8 ; 4.8) et s'étend dans le sens de transport (3.8 ; 4.8), et

   depuis le premier bord de l'ouverture de dégazage (3.2 ; 4.2) dans le sens de transport (3.8 ; 4.8) de l'extrudeuse, l'au moins un élément à vis sans fin à grand pas (3.4) ou l'au moins un élément à vis sans fin asymétrique (4.4), ou l'au moins un élément à vis sans fin qui est monté excentriquement sur l'axe de rotation de l'arbre à vis sans fin s'étendant sur 0 à 50 % de la longueur de l'ouverture de dégazage (3.2 ; 4.2) jusque dans l'ouverture de dégazage (3.2 ; 4.2), et l'au moins un élément à vis sans fin à grand pas (3.4) ou l'au moins un élément à vis sans fin asymétrique (4.4), ou l'au moins un élément à vis sans fin qui est monté excentriquement sur l'axe de rotation de l'arbre à vis sans fin commençant dans le sens de transport (3.8 ; 4.8) avant le bord de l'ouverture de dégazage (3.2 ; 4.2) situé en premier dans le sens de transport (3.8 ; 4.8) et s'étendant au moins jusqu'au bord de l'ouverture de dégazage (3.2 ; 4.2) qui est situé en premier dans le sens de transport (3.8 ; 4.8),

   au moins un élément à vis sans fin à pas faible (3.6), qui présente un rapport X du pas T au diamètre du boîtier intérieur Di (3.3 ; 4.3) inférieur à 1,5, faisant suite directement dans le sens de transport (3.8 ; 4.8) à cet au moins un élément à vis sans fin à grand pas (3.4) ou à cet au moins un élément à vis sans fin asymétrique (4.4) ou à cet au moins un élément à vis sans fin qui est monté excentriquement sur l'axe de rotation de l'arbre à vis sans fin.

2. Extrudeuse selon la revendication 1, chaque élément à vis sans fin à grand pas (3.4) étant en même temps un élément à vis sans fin asymétrique (4.4) ou un élément à vis sans fin qui est monté excentriquement sur l'axe de rotation de l'arbre à vis sans fin.

3. Extrudeuse selon la revendication 1 ou la revendication 2, chaque élément à vis sans fin à grand pas (3.4) étant aussi bien en même temps un élément à vis sans fin asymétrique (4.4) qu'un élément à vis sans fin qui est monté excentriquement sur l'axe de rotation de l'arbre à vis sans fin.

4. Extrudeuse selon l'une des revendications 1 à 3, l'au moins un élément à vis sans fin à grand pas (3.4) ou l'au moins un élément à vis sans fin asymétrique (4.4) ou l'au moins un élément à vis sans fin qui est monté excentriquement sur l'axe de rotation de l'arbre à vis sans fin s'étendant jusque dans l'ouverture de dégazage (3.2 ; 4.2) sur au plus 20 %, de préférence au plus 10 %, de la longueur de l'ouverture de dégazage (3.2 ; 4.2) depuis le bord de l'ouverture de dégazage (3.2 ; 4.2) situé en premier dans le sens de transport (3.8 ; 4.8).

5. Extrudeuse selon l'une des revendications 1 à 4, l'au moins un élément à vis sans fin à grand pas (3.4) ou l'au moins un élément à vis sans fin asymétrique (4.4) ou l'au moins un élément à vis sans fin qui est monté excentriquement sur l'axe de rotation de l'arbre à vis sans fin s'étendant dans le sens opposé au sens de transport (3.8 ; 4.8) sur au moins 10 % jusqu'à un maximum de 100 %, de préférence au moins 20 % jusqu'à un maximum de 50 %, de la longueur de l'ouverture de dégazage (3.2 ; 4.2) depuis le bord de l'ouverture de dégazage situé en premier dans le sens de transport (3.8 ; 4.8) de l'extrudeuse (3.2 ; 4.2).

6. Extrudeuse selon l'une des revendications 1 à 5, chaque arbre à vis sans fin comportant, dans la zone d'entrée de l'au moins une ouverture de dégazage, exactement un élément à vis sans fin qui est un élément à vis sans fin à grand pas ou un élément à vis sans fin asymétrique ou un élément à vis sans fin qui est monté excentriquement sur l'axe de rotation de l'arbre à vis sans fin.

7. Extrudeuse selon l'une des revendications 1 à 6, la longueur axiale de l'au moins un élément à vis sans fin à grand pas (3.4) ou de l'au moins un élément à vis sans fin asymétrique (4.4) ou de l'au moins un élément à vis sans fin qui est monté excentriquement sur l'axe de rotation de l'arbre à vis sans fin étant égale à 0,1 à 3 fois, de préférence 0,5 à 1 fois, le diamètre de boîtier intérieur Di (3.3 ; 4.3).

8. Extrudeuse selon l'une des revendications 1 à 7, l'au moins un élément à vis sans fin, qui est un élément à vis sans fin à grand pas ou un élément à vis sans fin asymétrique ou un élément à vis sans fin qui est monté excentriquement sur l'axe de rotation de l'arbre à vis sans fin, étant un élément de transport.

9. Extrudeuse selon l'une des revendications 1 à 8, l'au moins un élément à vis sans fin à grand pas (3.4) ou l'au moins un élément à vis sans fin asymétrique (4.4) ou l'au moins un élément à vis sans fin qui est monté excentriquement sur l'axe de rotation de l'arbre à vis sans fin étant un élément à vis sans fin à pas simple, un élément à vis sans fin à double pas, un élément à vis sans fin à triple pas ou un élément à vis sans fin à quadruple pas, de préférence un élément à vis sans fin à double pas.

10. Extrudeuse selon l'une des revendications 1 à 9, chaque arbre à vis sans fin comportant, dans la zone d'entrée de l'au moins une ouverture de dégazage, au moins un élément à vis sans fin qui n'est ni un élément à vis sans fin à grand pas (3.4) ni un élément à vis sans fin asymétrique (4.4) ni un élément à vis sans fin qui est monté excentriquement sur l'axe de rotation de l'arbre à vis sans fin.

11. Extrudeuse selon la revendication 10, l'au moins un élément à vis sans fin situé sur chaque arbre à vis sans fin dans la zone d'entrée de l'au moins une ouverture de dégazage et qui n'est ni un élément à vis sans fin à grand pas (3.4) ni un élément à vis sans fin asymétrique (4.4) ni un élément à vis sans fin qui est monté excentriquement sur l'axe de rotation de l'arbre à vis sans fin, ayant une longueur axiale qui est égale à 0,1 à 3 fois, de préférence 0,5 à 1,5 fois, le diamètre de boîtier intérieur Di (3.3 ; 4.3).

12. Extrudeuse selon l'une des revendications 1 à 11, la longueur de l'ouverture de dégazage (3.2 ; 4.2) dans le sens de transport (3.8 ; 4.8) étant de 50 à 750 % du diamètre de boîtier intérieur Di (3.3 ; 4.3) de l'extrudeuse.

13. Extrudeuse selon l'une des revendications 1 à 12, la surface en coupe transversale de l'ouverture de dégazage (3.2 ; 4.2) étant de 50 à 1400 % du carré du diamètre de boîtier intérieur Di (3.3 ; 4.3) de l'extrudeuse.

14. Utilisation d'une extrudeuse selon l'une des revendications 1 à 13 pour produire et transformer des matières plastiques.

15. Utilisation selon la revendication 14 pour dégazer des matières plastiques ou pour produire et transformer des matières plastiques qui sont des matières en fusion ou des solutions de polymères thermoplastiques ou des matières en fusion ou des solutions de caoutchoucs.

Fig. 1

Fig. 2

2.1    2.3    2.2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 2008036115 A1

**In der Beschreibung aufgeführte Nicht-Patentliteratur**

*   **KLEMENS KOHLGRÜBER.** Der gleichläufige Doppelschneckenextruder. Hanser Verlag, 2007, 72-73, 191-212